# EUROPÄISCHE PATENTANMELDUNG

(11) **EP 2 302 369 A1**
(43) Veröffentlichungstag der Anmeldung: **30.03.2011**
(21) Anmeldenummer: 10009782.3
(22) Anmeldetag: 17.09.2010
(51) Int. Cl.: G01N 21/958

(54) **Verfahren zur Bestimmung von Defekten in einem für elektromagnetische Wellen transparenten Material, insbesondere für optische Zwecke, eine Vorrichtung hierzu sowie die Verwendung dieser Materialien**

(30) Priorität: 25.09.2009 DE 102009043001
(71) Anmelder: Schott Solar AG, 55122 Mainz (DE)
(72) Erfinder: Lemke, Christian, 07743 Jena (DE); Lohse, Manuela, 07747 Jena (DE); Ortmann, Lars, Dr., 07749 Jena (DE); Strohm Stephan, 07749 Jena (DE); Hertzsch, Albrecht, Dr., 07743 Jena (DE); Hehl, Karl, 07743 Jena (DE)
(74) Vertreter: Fritzsche, Thomas

(57) **Zusammenfassung**

Die vorliegende Erfindung betrifft eine Streulichtmessvorrichtung, mit der die Streulichtintensität von Streulicht eines auf einen Prüfling aus optisch transparentem Material einfallenden Lichtstrahls erfassbar ist, die eine Abbildungsoptik und eine lichtempfindliche Erfassungsvorrichtung umfasst, wobei mit der Abbildungsoptik das Streulicht erfassbar und auf eine Detektorfläche der Erfassungsvorrichtung abbildbar ist, mit der Abbildungsoptik das Streulicht in einem Streuwinkelbereich erfassbar ist, und mit der Erfassungsvorrichtung die Streulichtintensität durch Aufsummieren des in dem Streuwinkelbereich erfassten Streulichtes über die Detektorfläche bildbar ist.
Die vorliegende Erfindung betrifft weiterhin ein Streulichtmessverfahren, mit dem die Streulichtintensität von Streulicht eines auf einen Prüfling aus optisch transparentem Material einfallenden Lichtstrahls erfasst wird, insbesondere mit einer erfindungsgemäßen Streulichtmessvorrichtung, welches folgende Schritte umfasst:
- Bestrahlen des Prüflings mit dem Lichtstrahl;
- Erfassen des Streulichtes mit einer Abbildungsoptik;
- Abbilden des mit der Abbildungsoptik erfassten Streulichtes auf eine Detektorfläche einer lichtempfindlichen Erfassungsvorrichtung;

wobei das Streulicht in einem mit der Abbildungsoptik erfassbaren Streuwinkelbereich erfasst wird und die Erfassungsvorrichtung die Streulichtintensität durch Aufsummieren des über die Detektorfläche erfassten Streulichtes bildet.

## Beschreibung

Die vorliegende Erfindung betrifft ein Verfahren zur Bestimmung von Defekten in Materialien, insbesonders für optische Zwecke durch Erfassung von an den Defekten gestreuten Wellen, insbesondere mittels einem CCD- bzw. ortsauflösender Fotodetektor, sowie eine Vorrichtung zur Durchführung des Verfahrens, die eine Quelle für elektromagnetische Wellen sowie eine gegebenenfalls drehbare Halterung für das Material und einen gegebenenfalls schwenkbaren Detektor zum Erfassen von gestreuten Wellen umfasst. Die Erfindung betrifft auch die Verwendung der mit den Verfahren erhaltenen Materialien.

In vielen optischen Anwendungen, insbesondere bei Verwendung von Licht mit hoher Ausgangsleistung oder hoher Pulsenergie, wie beispielsweise Laserlicht, werden für optische Elemente, wie beispielsweise Linsen, Prismen, Masken, Spiegel oder Filter besonders hohe Anforderungen an die Güte des optisch transparenten Materials gestellt. Neben guten Transmissionseigenschaften werden je nach geplanter Anwendung eine sehr gute Homogenität, ein sehr geringer Blasengehalt sowie sehr wenig Einschlüsse gefordert.

Die Prüfung der Eigenschaften von optisch wirksamen Defekten, wie ihre Größe, Form und Lage sowie ihre Art, also Blasen und Einschlüsse im Volumeninneren von optisch transparenten Materialien, erfolgt derzeit lediglich durch eine visuelle Beurteilung. Dabei wird ein zu untersuchender Prüfling mit annähernd parallelem Licht durchleuchtet und die Größe und Lage der im Strahlkanal erkennbaren Materialfehler abgeschätzt. Die Beurteilung kann mit einem Mikroskop überprüft werden. Eine solche Prüfung ist jedoch zeitaufwendig, verlangt hohe Konzentration vom Prüfer und muss in einem Dunkelraum erfolgen. Weiterhin ist die Größe der Prüflinge beschränkt. Darüber hinaus ermöglicht dieses Verfahren auch nur eine Abschätzung und keine quantitative Erfassung der Größe und Lage der Materialfehler, die insbesondere auf Erfahrungswerten des Prüfers beruht, die Form der Defekte kann größtenteils nicht ermittelt werden und das Verfahren ist auf Materialfehler größer 10 - 20µm beschränkt. Daher können höchste Qualitätsansprüche, insbesondere das Erfassen von Materialfehlern zumindest ab einer Größe von ca. 1µm oder kleiner, mit dieser Methode nicht erfüllt werden.

Die Nutzung von Streulicht zum Detektieren von Partikeln ist an sich bekannt. So beschreibt z. B. die DE 199 32 870 A1 eine Vorrichtung zur optischen Partikel- und Partikelströmungsanalyse, bei dem ein aus einem flüssigen oder gasförmigen Medium oder einem Vakuum bestehendes optisch transparentes Messvolumen durchleuchtet und über ein Mikroskop auf eine Kamera abgebildet wird. Die Vorrichtung ermöglicht eine Untersuchung der Bewegungs- und Strömungseigenschaften von Partikeln im Medium. Eine Bestimmung der Partikel ist damit jedoch nicht möglich und mit dem Verfahren sind keine weiteren Informationen erhältlich, d. h. die Partikel sind bzgl. ihrer Lage, Art, Größe und Form nicht dreidimensional erfassbar.

Mit dem weiterhin bekannten Phasendopplerverfahren sind keine Teilchenformen bestimmbar und das untersuchbare Messvolumen bzw. der Messbereich ist sehr eingeschränkt. (Damaschke et al (1998), Appl. Optics 37 : 1752-1761)

Eine weitere Methode zum Erfassen von Partikeln ist in der GB 2379977 A für einen Rauchdetektor beschrieben. Dabei wird die Intensität von an Partikeln gestreutem Streulicht dadurch erfasst, dass mithilfe einer Strahlenfalle das an vielen Partikeln gestreute Streulicht innerhalb eines Volumenbereiches aufsummiert wird. Eine derartige Vorrichtung erfasst lediglich sphärische Partikel und ermöglicht keine Qualifizierung von Partikeln nach ihrer Art und Form. Auch ist eine genaue Bestimmung der Lage der Partikel nicht möglich.

Ferner wird eine Methode zur Erkennung lokaler Defekte (Blasen bzw. Einschlüsse)im Paper "System for Detection of Small Inclusions in Large Optics" beschrieben (Wolfe, Runkel, (2008), Proc. of SPIE Vol. 7132). Dabei rastert ein Laser-strahl das zu prüfende Volumen ab. Sobald dieser auf einen lokalen Defekt trifft, wird das gestreute Licht mit einer Kamera erfasst. Anschließend wird über eine Optik die Größe des Defektes bestimmt. Der Schwerpunkt dieser Messung liegt auf der Erkennbarkeit von Defekten <5µm, nicht aber auf der Analyse der gefundenen Defekte.

Aufgabe der vorliegenden Erfindung ist es daher, ein Verfahren sowie eine Vorrichtung zu schaffen, mit der die optische Güte eines Prüflings aus optisch transparentem Material in einfacher und kostengünstiger Weise rasch quantitativ und qualitativ charakterisiert werden kann, wobei auch Streuzentren mit einer Größe im Mikrometerbereich, insbesondere bis hinunter zu einer Größe von mindestens ca. 0,5µm, hinsichtlich ihrer Art z.B. Blase oder Einschluss, ihrer Größe, ihrer Lage und ihrer Form, wie z.B. stabförmig, rund oder oval, erfassbar sind.

Eine weitere Aufgabe der Erfindung besteht darin, dass die Erfassung einen eindeutigen, nachvollziehbaren und protokollierbaren Nachweis der Streuzentren ermöglicht und so wenig Messzeit erfordert, dass die Einbindung des Verfahrens in eine Produktionslinie möglich ist.

Diese Aufgabe wird mit den in den Ansprüchen definierten Merkmalen gelöst.

Erfindungsgemäß wurde nämlich gefunden, dass sich beim Durchstrahlen eines optischen transparenten Materials mit einem Strahl elektromagnetischer Wellen die Intensität einer durch einen Defekt erzeugten Streuung, welche in einem Azimutwinkelbereich erfasst wird, periodisch ändert wodurch ein unregelmäßiges Muster aus Wellen mit unterschiedlichen Streulichtintensitäten entstehen.

Dabei korrelieren der Betrag der Intensitätsänderung und die Häufigkeit dieser Änderung (frequenzähnliche Variabilität bzw. Modulation der Intensität)innerhalb des Winkelbereichs) mit der Größe und Form des jeweiligen Defekts.

Aus einem Vergleich der so gefundenen Wellenmuster der Streulichtintensität mit bereits anderen, vorzugsweise mit Hilfe eines Beugungsmodells berechneten Modulationen bzw. Frequenzänderung der Intensität, ist es möglich, die Größe, Form und Art des jeweiligen optischen Defektes zu bestimmen. Dabei wurde auch gefunden, dass diese Wellenmuster mit klassischen Verfahren zur Bestimmung der Welligkeit von Oberflächen charakterisiert werden können, z.B. wie sie auch für Dicht,- Gleit,- und Wälzflächen angewendet werden.

Erfindungsgemäß wird daher mittels eines Detektors die Änderung der Intensität der durch das Streuzentrum bzw. den Defekt hervorgerufenen Streuung entweder während einer azimutalen Drehung des Materials um eine im Strahlengang der elektromagnetischen Wellen verlaufende Drehachse oder durch azimutales, radiales Schwenken des Detektors um diese Drehachse erfasst. Dabei erfolgt die Bestimmung des Streulichts in einem konstanten Streuwinkel zur Drehachse. Bei azimutaler Drehung ϕ des Detektors bzw. des Prüflings um einen vorgebaren Dreh- bzw. Schwenkwinkel dϕ wird die Streuintensität für einen festen Streuwinkel als Funktion des azimutalen Dreh bzw. Schwenkwinkels gemessen. Die Winkelschrittweite und die numerische Apertur des Detektors geben das Auflösungsvermögen der Streulichtmodulationen vor. Als praxisrelevanter Wert hat sich eine Winkelschrittweite von 0,61-0,5 bzw. dϕ=0.1°± 0,05 bewährt.

Die Dreh- bzw. Schwenkachse entspricht dem Strahl der elektromagnetischen Wellen. Minimale parallele Versetzungen zwischen mechanischer Drehachse und optischer Beleuchtungsachse können toleriert werden, wenn die Drehachse als auch der Strahl den Materialfehler durchlaufen.

In einer zweckmäßigerweisen Ausgestaltung erfasst der Detektor das Streulicht des Defekts durch Abbildung mit einem Spiegel und/oder einer Linse in einem definierten Streuwinkel. Vorzugsweise wird das erfasste Streulicht durch ein Objektiv so auf die Detektorfläche abgebildet, dass eine photosensitiven Einrichtung wie beispielsweise eine CCD-Kamera, eine Fotodiode oder ein SEV-Detektor ausschließlich das Streulicht des Defekts erfasst. Ein Aufsummieren des Streulichtes über die Detektorfläche ergibt die Streulichtintensität. Die numerische Apertur des Objektivs gibt den erfassbaren Raumwinkel des Streulichts an und sollte im Bereich der azimutalen Winkelauflösung liegen.

Das Streulicht kann durch Einstrahlen von beliebigen elektromagnetischen Wellen erzeugt werden. Zweckmäßige Wellen sind Licht, insbesonders sichtbares Licht, IR-Licht, UV-Licht sowie extremes UV. Vorzugsweise wird Laserlicht verwendet. Zweckmäßigerweise ist das eingestrahlte bzw. Anregungslicht ein paralleles Lichtbündel. Zweckmäßigerweise ist die eingestrahlte elektromagnetische Welle ein Strahl aus kohärenten Wellen, insbesonders aus zirkular, radial oder linear polarisierten Wellen. Bevorzugte Laser sind leistungsstarke HeNe-Laser mit einer Wellenlänge von 633nm und einer Ausgangsleistung >20mW sowie Festkörperlaser mit einer Wellenlänge von 532nm bei einer Ausgangsleistung von >50mW.

Durch die Verwendung eines feinen dünnen Lichtstrahls ist es möglich, das Volumen des optischen Materials bzw. des Prüflings rasterartig abzutasten bzw. zu scannen. Auf diese Weise können im gesamten Raum bzw. Volumen des zu bestimmenden Materials Lage, Größe, Form und Art sämtlicher Defekte ermittelt und kartiert werden.

In einer weiteren bevorzugten erfindungsgemäßen Ausführungsform wird das von einem Defekt erzeugte Streulicht zusätzlich in mindestens einem ggf. auch mehreren weiteren Streuwinkel(n) azimutal aufgelöst bestimmt. Hierzu wird, wie zuvor beschrieben, das Material bzw. der Prüfling nochmals um die gleiche durch den Defekt verlaufende Drehachse eine einem vorzugsweise dem gleichen Azumitwinkelbereich gedreht und dabei die Schwankungen der Intensität des Streulichtes bei dem weiteren Detektions- bzw. Streuwinkel erfasst. Selbstverständlich ist es auch hier möglich, den Detektor um den Azumitwinkelbereich von der Drehachse beabstandet radial um diese zu schwenken. Erfindungsgemäß wurde nämlich überraschenderweise gefunden, dass sich aus der Differenz der durchschnittlichen Streuintensitäten für zwei unterschiedliche Streuwinkel die Art des Defektes bestimmen lässt. So zeigt beispielsweise eine geringe Intensitätsdifferenz der für den jeweiligen Streuwinkel ermittelten Intensitäten einen Einschluss eines vom optischen Material verschiedenen Partikels an, wie beispielsweise eine Gasblase oder - ein Fremdmaterialeinschluss. Besteht der Defekt aus dem gleichen oder einem Material mit einem für das verwendete Licht vergleichbaren Brechungsindex, so wurde überraschenderweise gefunden, dass sich dann die mittlere Intensität des Streulichtes bei verschiedenen Detektionswinkeln stark ändert. Auf diese Weise ist es mit dem erfindungsgemäßen Verfahren erstmals möglich, allein mittels physikalisch optischer Parameter nicht nur die Lage sondern auch die Form und Art des jeweiligen Defektes zu bestimmen. Dieser brechzahlabhängige Intensitätsabfall bei größer werdenden Streuwinkel kann auch mit der bekannten Mie-Beugung beschrieben werden. Eine ausreichend messbare Differenz der mittleren Intensitäten ergibt sich z.B. für die bevorzugten Streuwinkel im Bereich von 25-250, insbesonders von 20-45 z.B. Θ₁=25°± 2° und Θ₂=30°± 2° und/oder Θ₂=30°t 2° und Θ₃=40°± 2°.

In einer erfindungsgemäßen bevorzugten Ausführungsform umfasst der Detektor bzw. Detektoreinheit eine Abbildungsoptik, die das Streulicht über den gesamten azimutalen Winkelbereich für einen definierten Streuwinkel gleichzeitig erfasst und die Streuintensität azimutal winkelaufgelöst ermittelt.

Diese Abbildungsoptik umfasst vorzugsweise einen ringförmigen Spiegel, welcher die vom Defekt ausgehende divergente Streustrahlung in zueinander parallel verlaufende Strahlen umlenkt und oder eine Mehrzahl von ringförmig angeordneten Linsen welche die Streustrahlung zu einer Detektionseinheit leitet. In einer weiteren erfindungsgemäßen bevorzugten Ausführungsform ist die Mehrzahl der ringförmig angeordneten Linsen zu einer einzigen durchgehenden Ringlinse zusammengefasst bzw. wird durch diese ersetzt. Eine solche Ringlinse wird durch eine um einen zentralen Mittelpunkt kreis- bzw. ringförmig verlaufende, wulstartige Linsenoberfläche gebildet, deren Linsenquerschnitt über den gesamten Kreisumfang konstant ist. Das von Ringspiegel und/oder Ringlinse gesammelte Streulicht wird dann zu einer lichtsensitiven Einrichtung wie beispielsweise einer CCD-Matrix oder einem Photodiodenarray weitergeleitet. Dort wird die gesamte azimutale Streulichtverteilung winkelaufgelöst für einen definierten Streuwinkel als Ring abgebildet. Wird eine bildseitige telezentrische Abbildung gewährleistet, so kann durch eine Veränderung des Abstandes von Ringlinse und Ringspiegel zum Prüfling die Objektebene der Abbildungsoptik verschoben werden. Auf diese Weise ist es möglich, Defekte in unterschiedlicher Prüflingstiefe zu erfassen und abzubilden. In einer weiteren bevorzugten Ausführungsform wird der Abstand von Ringlinse und Ringspiegel zur Prüflingsoberfläche mittels eines Signalgebers erfasst und direkt an eine Rechner-gesteuerte Speichereinheit weitergeleitet. Auf diese Weise kann für jeden beliebigen Punkt im Prüfling bzw. dem optischen Material die jeweiligen Streulichteigenschaften gespeichert, zugeordnet und kartiert werden.

Die zur Durchführung des Verfahrens verwendete ebenfalls erfindungsgemäße Vorrichtung umfasst zweckmäßigerweise eine Halterung bzw. Lagerung für das zu untersuchende optische Material (Prüfling). Diese Lagerung ist um eine Rotationsachse um 360° drehbar bzw. rotierbar. Darüber hinaus weist die Halterung eine Einrichtung auf, mit der der Prüfling relativ zur Drehachse verschiebbar ist, und zwar derart, dass die optische Achse durch jeden Teil des Prüflings verlaufen kann. Auf diese Weise ist es möglich, das gesamte Volumen des Prüflings bzw. des zu untersuchenden Materials rasterförmig zu durchstrahlen und zu erfassen. Zweckmäßigerweise enthält die Vorrichtung weitere Signalgeber, welche die aktuelle Lage des Prüflings zur optischen Achse der Detektoreinheit an die Rechner-gesteuerte Speichereinheit weiterleiten. Somit lässt sich durch relative Verschiebung zwischen der Detektoreinheit und dem Prüfling zu jedem Volumenpunkt die Streulichtintensität azimutal winkelaufgelöst ermitteln und eine dreidimensionale Kartierung von Art, Größe und Form der optischen Defekte erhalten.

Im Gegensatz zu einer punktuellen Erfassung von Streulicht ermöglicht das Erfassen des Streulichtes eines Streuwinkelbereiches auch das Erkennen sehr kleiner und/oder stark richtungsabhängiger Streuzentren, beispielsweise Materialfehler im Mikrometerbereich, insbesondere von einer Größe z.B. von 0,5µm. Die theoretische minimal erfassbare Defektgröße ergibt gemäß der Mie-Beugung nach der bekannten Formel mit xM>0.2., wobei xₘ der Mie-Parameter und dp der Partikeldruchmesser bedeuten.

Optisch transparente Materialien sind beispielsweise Fused Silica (Quarzglas), Kalziumfluorid (CaF₂), Magnesiumfluorid (MgF₂), Borosilikat-Kronglas (BK 7), Zerodur und Quarzkristall.

Ganz besonders bevorzugt verläuft die Rotationsachse im Zentrum eines die Streuung verursachenden Materialfehlers. Daher kann durch Rotation der Abbildungsoptik oder des Prüflings um die Rotationsachse das durch den Materialfehler bzw. Defekt verursachte Streulicht in Abhängigkeit vom Drehwinkel winkelaufgelöst erfasst werden. Aus der Zuordnung der jeweiligen Streulichtintensität zum Drehwinkel lässt sich die Form, ihre Größe sowie ihren Typ des Materialfehlers im Prüfling bestimmen, die in Koordinaten angegeben werden kann.

Vorzugsweise umfasst die erfindungsgemäße Vorrichtung eine Recheneinheit. Die Recheneinheit ermöglicht das Speichern und Verarbeiten der erfassten Streulichtintensität sowie die durch Signalgeber übermittelte Lage von streuenden Defekten. Dadurch ist nicht nur die Streulichtverteilung eines Defektes des Prüflings sondern auch seine genaue Lage im Koordinatensystem nachvollziehbar und protokollierbar.

Bevorzugt umfasst die Abbildungsoptik ein Begrenzungsmittel, so dass möglichst kein Streulicht der Eintrittsfläche und/oder der Austrittsfläche des Lichtstrahls oder Streulichtes in den oder aus dem Prüfling auf das Erfassungsmittel abgebildet wird. Besonders bevorzugt ist das Begrenzungsmittel eine Apertur und/oder eine geeignetes Strahlformungsmittel im Strahlengang des Streulichtes. Ebenfalls bevorzugt sind die Eintrittsfläche und/oder die Austrittsfläche gering streuend, insbesondere poliert und/oder beispielsweise mit einem Immersionsöl benetzt, damit die an ihnen entstehende Streuung die Messung möglichst nicht beeinflusst. Weiterhin bevorzugt erfolgt die Begrenzung in der Recheneinheit mit einem geeigneten Algorithmus einer Software.

In einer weiteren erfindungsgemäßen Ausführungsform wird das über Dreh bzw. Azimutwinkel aufgetragene Wellenmuster der Streuintensitäten gemäß der von der VDA 2007 beschriebenen Regeln und Verfahren zur Beurteilung der Oberflächenbeschaffenheit und Welligkeit gekennzeichnet.(Verband der Automobilindustrie VDA, Dokumentation Kraftfahrzeugwesen e.V.(DFK) Ulrichstr. 14, D-74321 Bietigheim-Bissingen).

Für die statistische Welligkeitsanalyse werden Parameter wie beispielsweise die mittlere Höhe WDc, die Gesamthöhe WDt, die mittlere horizontale Welligkeitskenngröße WDSm sowie die Gesamtintensität und ein Anisotropiemaß herangezogen, die die Oszillationen der azimutalen Streulichtverteilung beschreiben und es ermöglichen, mittels einer beispielsweise in der Recheneinheit angelegten Datenbank von Streulichtverteilungen und mit Hilfe des vektoriellen Kirchhofbeugungsmodells an künstlichen Defekten durch Approximation der Messergebnisse mit theoretisch berechneten Kurven die Parameter Materialfehlergröße, Brechungsindex, Form und Orientierung des Materialfehlers zu ermitteln. Der Vergleich erfolgt bevorzugt anhand einer Probenbibliothek, die eine Vielzahl von Messergebnissen zu Proben mit Materialfehlern verschiedener Typen, Größen und Lagen enthält und einen Vergleich der Messergebnisse ermöglicht.

Mit der erfindungsgemäßen Streulichtmessvorrichtung und dem erfindungsgemäßen Streulichtmessverfahren, die sowohl in Transmissions- als auch Reflexionsrichtung eingesetzt werden können, ist eine quantitative Bestimmung der optischen Güte eines transparenten Materials eines Prüflings möglich. Im Prüfling aus optisch transparentem Material erzeugt ein in den Prüfkörper einfallender Lichtstrahl ein Streulicht bzw. eine Intensität, das in mindestens einem, vorzugsweise mindestens zwei vorgegebenen Streuwinkeln bzw. -bereichen azimutal winkelaufgelöst bestimmt wird. Die Streulichtintensität wird durch Summieren oder Integrieren des in einem Streuwinkelbereich gemessenen Streulichtes für den jeweiligen Azimutwinkel ermittelt.

Die ermittelte Streulichtintensitätsverteilung bzw. deren Änderung bildet eine bewertbare Messgröße in Abhängigkeit vom Azimut- bzw. Drehwinkel. Aus der Lage und dem Betrag der Peaks der Streulichtintensitätsverteilung (Modulation) lässt sich auf die Form, Größe, den Typ sowie die Lage der das Streulicht verursachenden Materialfehler schließen, wobei die Lage der Materialfehler mittels eines Signalgebers in Koordinaten angegeben werden kann. Mit der erfindungsgemäßen Streulichtmessvorrichtung und dem erfindungsgemäßen Streulichtmessverfahren sind Materialfehler ab einer Größe von ca. 0,5µm erfassbar. Die Recheneinheit ermöglicht die Bewertung der Messergebnisse sowie eine reproduzierbare Ausgabe und Protokollierung der Messung. Aufgrund der räumlichen Erfassung ist ein Gesamtbild des Prüflings erstellbar (Kartierung bzw. Mapping). Andererseits können auch Bilder einzelner Materialfehler erstellt werden. Die Koordinaten der Materialfehler sind mit einer Genauigkeit von zumindest ±0,5mm, die Größe eines Materialfehlers mit einer Genauigkeit von zumindest ±0,5µm erfassbar. Die Materialfehler sind entsprechend ihrem Typ tabellarisch und visualisiert darstellbar. Schließlich können sowohl Prüflinge mit matten als auch mit polierten Oberflächen geprüft werden.

Die Streulichtmessvorrichtung sowie das Streulichtmessverfahren ist überall einsetzbar, wo Materialfehler erfasst werden sollen. Sie eignet sich insbesondere für Fusionsoptiken, ganz besonders für Großplatten aus Fused Silika für die Laserfusion. Es lassen sich mit ihr ohne weiteres Produkte mit einer Dimension bis zu (500*500*50)mm³ (Prüfrichtung 50mm) erfassen. Sie ist in Produktionslinien einsetzbar und ermöglicht eine Prüfung solcher Produkte in weniger als 2 Stunden. Prinzipiell ist es mit der erfindungsgemäßen Vorrichtung auch möglich, Prüflingsdicken bis zu 250mm zu vermessen.

Die Erfindung betrifft auch eine Abbildungsoptik, mit der punktförmige kleine Gegenstände, wie z.B. Volumeneinheiten oder optische Defekte, Einschlüsse, etc. auf einer photoempfindlichen Platte, wie z.B. einer CCD- Einrichtung erfasst werden können. Eine solche Vorrichtung umfasst eine ringförmige Anordnung. In einer einfachen Ausführungsform umfasst sie eine Vielzahl von Linsen, die auf einem Kreisumfang angeordnet sind, wobei der Mittelpunkt des Kreises und der Mittelpunkt der Kollimatorspiegel eine Symmetrieachse für die Abbildungsanordnung bilden. In einer besonders bevorzugten Ausführungsform werden die ringförmig angeordneten Linsen zu einer einzigen kreisförmig verlaufenden Ringlinse zusammengefasst, d.h. die Ringlinse wird durch einen ringförmig verlaufenden Wulst gebildet, wobei die Krümmung des Wulstes der Linsenwölbung entspricht. Eine derartige Ringlinse weist an jeder Stelle ihres Umfanges die gleiche Querschnittsform auf. Von der Ringlinse werden die senkrecht auf die Linse treffenden parallelen Strahlen zu einem rückseitig angeordneten Spiegel geleitet, welcher die Strahlen gegebenenfalls nach Reflektion von einem weiteren Spiegel an eine CCD- Einrichtung bzw. eine beliebige lichtempfindliche Vorrichtung weiterleitet, welche die Intensität der auftreffenden Lichtstrahlen qualitativ bzw. quantitativ erfasst.

In einer bevorzugten Ausführungsform der erfindungsgemäßen Vorrichtung umfasst dies einen Kollimator, welcher die von dem punktförmig abzubildenden Gegenstand divergent ausgehenden Lichtstrahlen derart umlenkt, dass diese anschließend parallel zueinander verlaufen. Zweckmäßigerweise ist dies ein Spiegel. Dieser ist vorzugsweise ringförmig ausgebildet. Prinzipiell ist es jedoch auch möglich, lediglich zwei oder mehrere gegenüberliegende kleinere Spiegel anzuordnen, welche die entsprechenden Lichtstrahlen ebenfalls parallelisieren, d.h. dass diese ebenfalls Kollimatoreigenschaften aufweisen. Prinzipiell kann jeder beliebige Kollimator verwendet werden. Vom Kollimator werden die nunmehr parallel verlaufenden Lichtstrahlen auf eine Linse gelenkt.

In einer weiteren erfindungsgemäß bevorzugten Ausführungsform sind in der Streulichterfassungs-Optik 2 ringförmige Linsenanordnungen konzentrisch zum Streulichtstrahl angeordnet. Auf diese Weise ist es möglich zeitlich versetzt oder gleichzeitig das Streulicht bei zwei verschiedenen Streulichtwinkeln zu messen. Prinzipiell ist es aber auch möglich die unterschiedlichen Streulichtwinkel mittels 2 verschiedener Linsen mit unterschiedlichem Durchmesser hintereinander zu bestimmen.

Mit der erfindungsgemäßgen Vorgehensweise ist es möglich einen größeren Prüfling in einem Zeitraum von ca. von 2 Stunden abzuscannen. Dabei ist es jedoch weiterhin bevorzugt den Prüfling zuerst einem groben Scan zu unterziehen und so die einzelnen Defekte zu ermitteln und ihre Raumlage zu lokalisieren. Diese folgt üblicherweise mittels 2 verschiedener Laserstrahlen.

Im Folgenden soll die Erfindung anhand von Figuren beispielhaft erläutert werden.

Dabei zeigt
- **Figur 1**: eine schematisierte Anordnung der erfindungsgemä- ßen Streulichtmessvorrichtung,
- **Figur 2**: zeigt eine Abbildungsoptik mit Ringlinse und ring- förmigem Kollimator,
- **Figur 3**: zeigt schematisch eine Streulichtintensitätsmes- sung eines Prüflings,
- **Figur 4**: zeigt eine Streulichtabbildung eines Strahlkanals, durch einen Prüfling mit einem Materialfehler,
- **Figur 5a**: zeigt eine azimutale Schwankung der Streulichtin- tensität bei einer Drehung von 360° an unter- schiedlich großen Defekten in einem optischen Glas.
- **Figur 5b**: zeigt die azimutalen Schwankungen von der Streu- lichtintensität eines feuerfesten Materials in Quarzglas bei einer Drehung von 350° bei Streu- lichtwinkeln von 30° und 40°
- **Figur 5c**: zeigt die Schwankungen der Streulichtintensitäten an einem künstlichen Defekt (Polierstaub) in Quarzglas

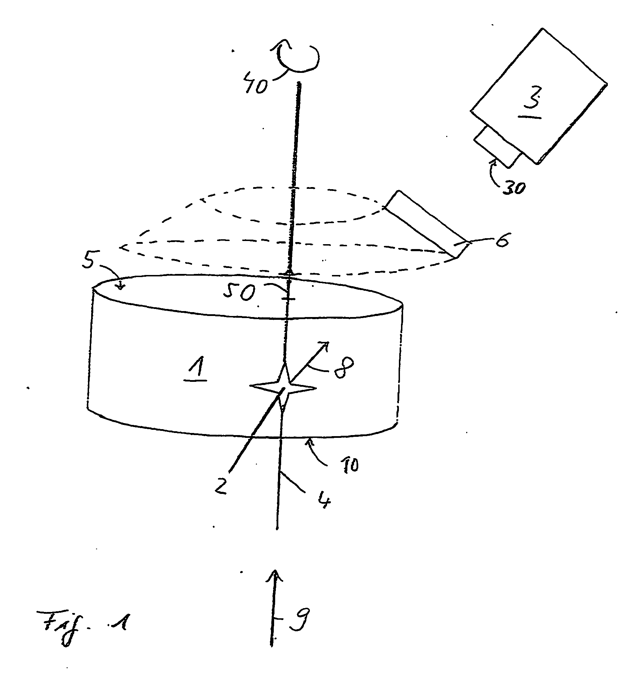

**Figur 1** zeigt schematisch eine erfindungsgemäße Streulichtmessvorrichtung. Die Streulichtmessvorrichtung umfasst eine Abbildungsoptik 6, mit der Streulicht, hier durch einen Pfeil 8 angedeutet, welches durch einen Materialfehler bzw. optischen Defekt 2 in einem Prüfling 1 verursacht ist, erfassbar und auf eine Detektorfläche 30 einer Erfassungsvorrichtung 3, insbesondere eine CCD-Kamera, abbildbar ist. Der Prüfling 1 oder die Detektionsoptik 6 ist um eine Rotationsachse 4 herum in eine Drehrichtung 40 drehbar, so dass Prüfling 1 und Abbildungsoptik 6 relativ zueinander verstellbar sind. Gegebenenfalls kann auch die Erfassungsvorrichtung 3 zusammen mit der Abbildungsoptik 6 gedreht werden. Durch Drehen der Abbildungsoptik 6 um die Rotationsachse 4 verändert sich die Position der Abbildungsoptik 6 mit dem durch die gestrichelten Linien angedeuteten Verlauf 66.

Durch einen Pfeil ist ein Lichtstrahl 9 angedeutet, der auf eine Eintrittsfläche 10 des Prüflings 1 fällt. Weiterhin ist eine Oberflächenormale 50 auf einer Austrittsfläche 5 des Streulichtes 8 aus dem Prüfling 1 durch einen Pfeil gezeigt. Als Lichtstrahl 9 wird bevorzugt Laserlicht verwendet.

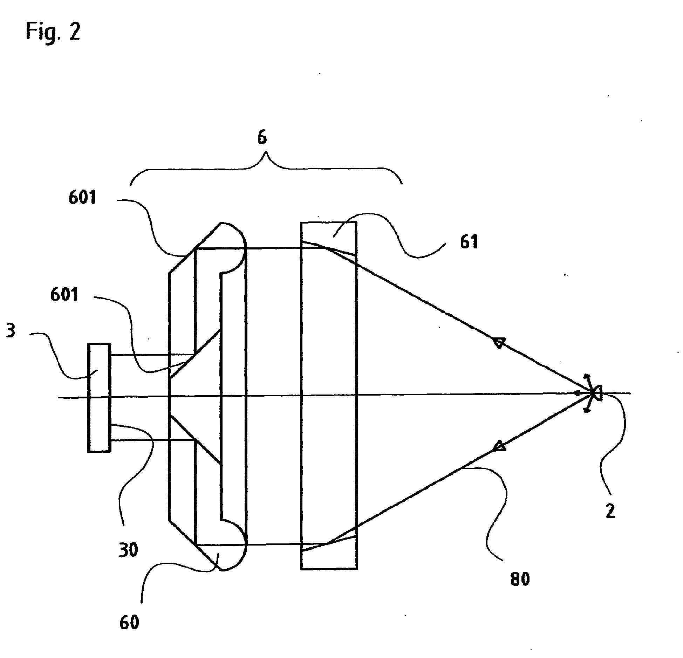

**Figur 2** zeigt eine bevorzugte Abbildungsoptik 6 der erfindungsgemäßen Vorrichtung. An einem Materialfehler 2 gestreutes Streulicht, von dem hier zwei Strahlverläufe 80 gezeigt sind, fällt auf einen Ringspiegel 61 der Abbildungsoptik 6. Der Ringspiegel 61 erfasst das Streulicht und spiegelt die Streulichtstrahlen 80 in eine Ringlinse 60 der Abbildungsoptik 6. Die Ringlinse 60 verfügt über ein Spiegelsystem 601, mit dem die Streulichtstrahlen 80 auf die Detektorfläche 30 der Erfassungsvorrichtung 3 abbildbar sind. Diejenigen Strahlen, die auf den durch die Ringlinse gebildete innere Kreisfläche auftreffen, werden von der Detektionsoptik üblicherweise nicht mit erfasst.

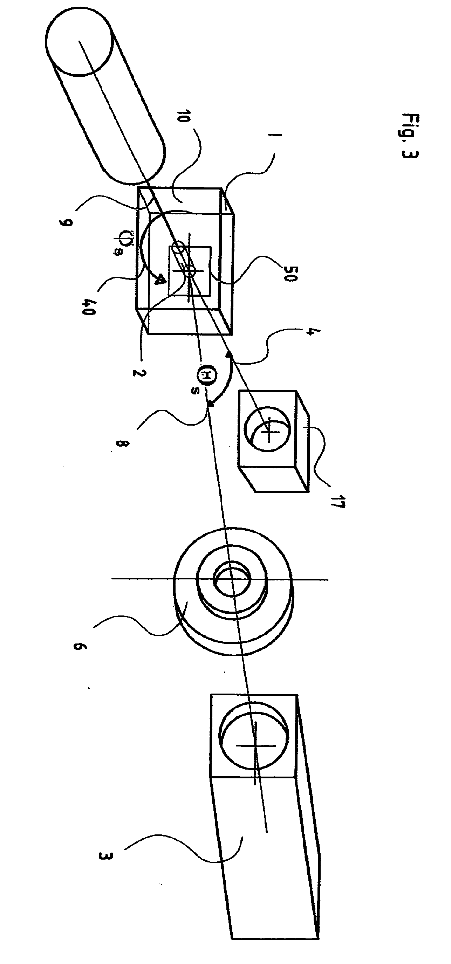

**Figur 3** zeigt schematisch eine erfindungsgemäße Vorrichtung mit einem Prüfling 1. Darin fällt der Lichtstrahl 9 an der Eintrittsfläche 10 auf den Prüfling 1, läuft durch diesen hindurch und tritt an seiner Austrittsfläche 5 wieder aus. Im Prüfling 1 wird der Lichtstrahl 9 an einem Materialfehler 2 gestreut, wobei das gestreute Licht, welches hier durch einen Strahl mittleren Streulichtes 8 zur Oberflächennormale (s. Fig. 1) der Austrittsfläche 5 (s. Fig. 1) gezeigt ist, in einem Streuwinkel 81 aus dem Prüfling 1 austritt. Ein nicht gestreuter Teil des Lichtstrahls 9 wird in einer Strahl- bzw. Lichtfalle 17 gefangen. Das Streulicht 8 wird mittels einer Abbildungsvorrichtung bzw Optik 6, das gegebenenfalls eine Aperturblende 14 umfasst, auf ein Spiegelsystem 16 geleitet, das es auf die Detektorfläche 30 einer Detektionseinrichtung 3 abbildet. Aperturblende14, Objektiv 15 und Spiegel 16 bilden hier die Abbildungsoptik 6.

Mit dem Objektiv 6 kann ein Streuwinkel erfasst werden, der durch die numerische Apertur des Objektivs 6 sowie den Streuwinkel 81 des Streulichtes zur Oberflächennormale 50 (s. Fig. 1) der Austrittsfläche 5 bestimmt ist. Durch Drehung des Prüflings um eine Drehachse 4 wird vom Materialfehler 2 Streulicht aus verschiedenen Dreh- bzw. Azumitwinkeln erzeugt und von der Abbildungsoptik 6 sowie der Detektionseinheit 3 efasst. Alternativ kann Eintritts und Austrittsstelle des Strahls auf die durch Drehung der Abbildungsoptik 6 um eine Rotationsachse 4 (die der Drehachse des Prüflings entspricht) in eine Drehrichtung 40 kann das Streulicht für eine Vielzahl von Azumitwinkeln jeweils in dem durch das Objektiv 6 vorgegebenen Streuwinkel bzw. -bereich erfasst werden.

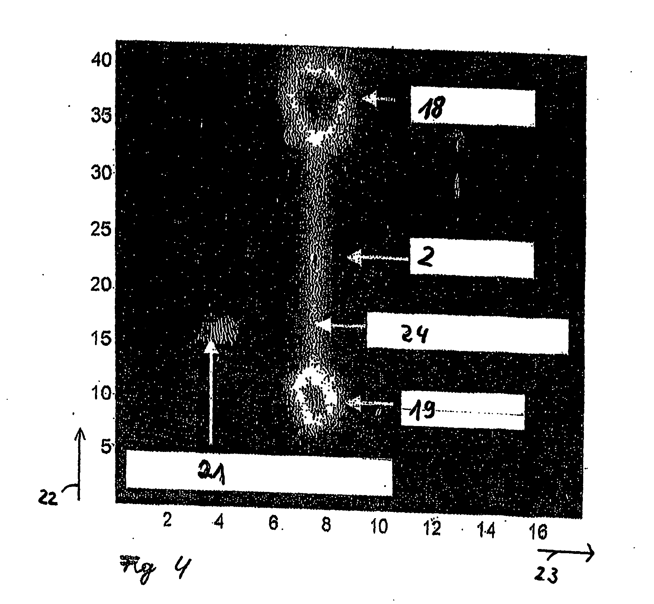

**Figur 4** zeigt die Streulichtabbildung eines Strahlkanals 24 durch einen Prüfling mit einem Materialfehler 2. Dabei ist die Streuung 18 und 19 jeweils an den Eintritts- und Austrittsflächen deutlich erkennbar. Ebenfalls deutlich zu erkennen ist die Streuung eines Artefaktes 21 an der Oberfläche des Prüflings. Auf der x-Achse 22 ist dabei die Tiefenlage des Strahlverlaufes angegeben und auf der γ-Achse 23 der Rasterabstand der einzelnen Messpunkte am Prüfling.

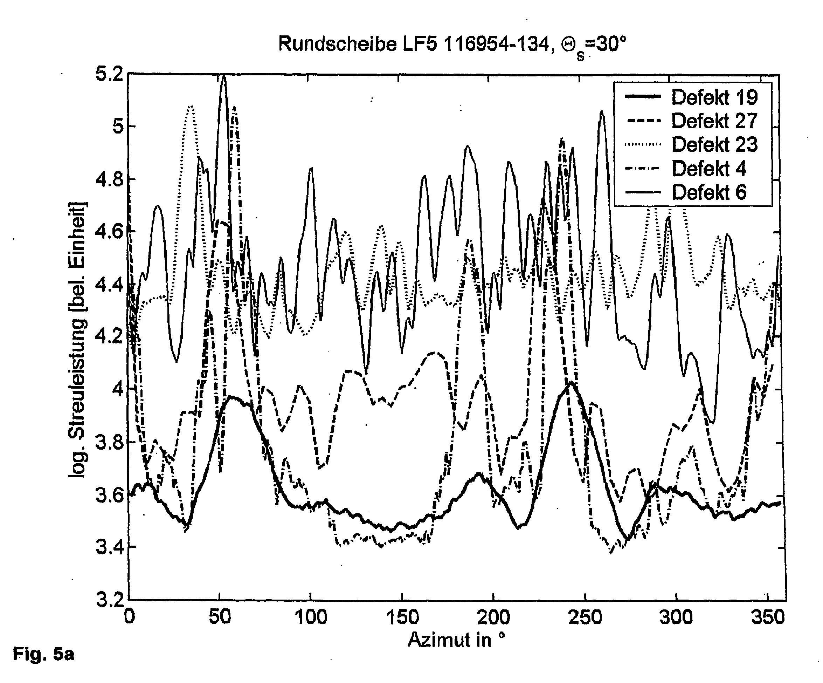

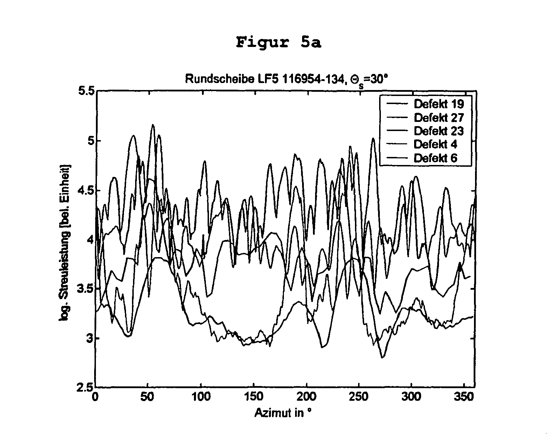

**Figur 5a** zeigt die Änderung der Streulichtintensitäten von verschiedenartigen Defekten in einem Glas bei einer vollständigen Rotation um 360°. Sämtliche Defekte wurden mit dem gleichen Streuwinkel (bzw. Azimutwinkel, Θ s = 30°) bestimmt. Dabei zeigen unterschiedliche Defekte eine unterschiedliche frequenzartige Varianz (bzw. Modulation) der Streuintensität sowie eine je nach Art des Defektes verschiedene durchschnittliche Streuintensität.

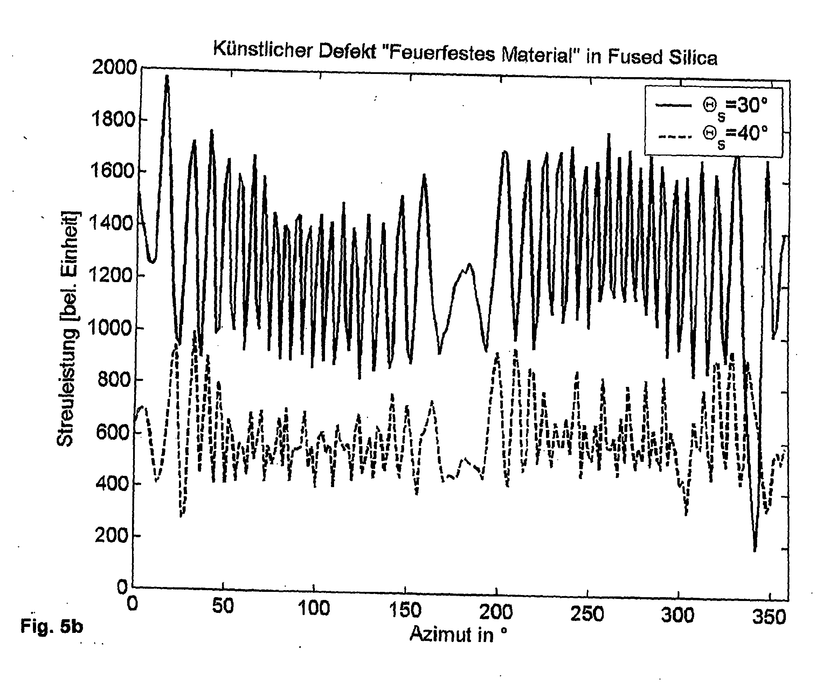

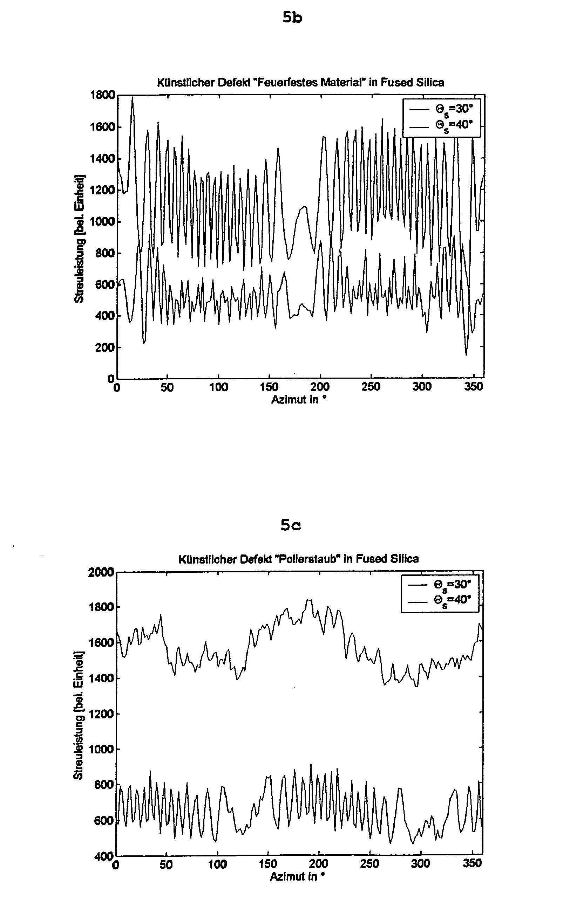

**Figur 5b** zeigt die Streulichtänderung eines künstlichen Defektes aus einem feuerfesten Material (Schamottmaterial) in Quarzglas. Dabei wurde die Streulichtintensität bei zwei verschiedenen Streulichtwinkeln, nämlich einmal Θs = 30° und Θs = 40° bestimmt. Dabei zeigt der hier vorliegende Defekt einen relativ geringen Abstand zwischen beiden Streuwinkeln, nämlich von nur ca. 5 bis 600 Einheiten.

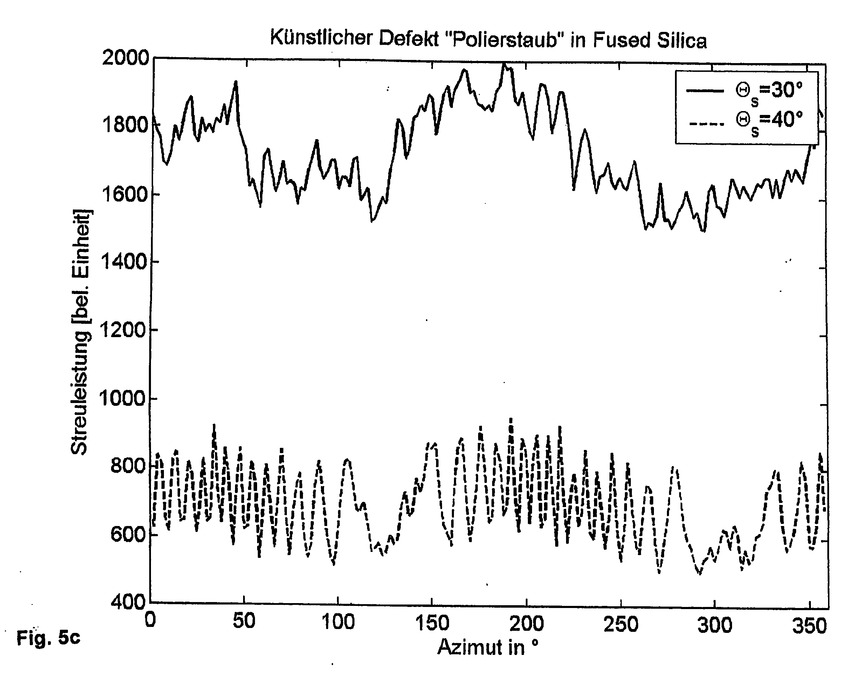

**Figur 5c** zeigt die unterschiedliche Streuvariation von Polierstaub in Quarzglas, d.h. von einem Einschluss des gleichen Materials. Wie daraus zu ersehen ist, zeigt ein Defekt, welcher aus dem gleichen Material besteht bzw. die gleiche oder vergleichbare Brechzahl aufweist, eine starke Differenz der durchschnittlichen Streulichtänderung bei verschiedenen Streu- bzw. Azimutwinkeln.

### Bezugszeichenliste:

- 1: Prüfling, Materialprobe
- 10: Eintrittsfläche eines Lichtstrahls in den Prüfling
- 2: Materialfehler, Einschluss, Blase, Knoten
- 20: Ebene des Materialfehlers
- 3: Erfassungsvorrichtung, CCD-Kamera
- 30: Detektorfläche der Erfassungsvorrichtung
- 4: Rotationsachse
- 40: Rotationsrichtung
- 5: Austrittsfläche
- 50: Oberflächennormale auf der Austrittsfläche
- 6: Abbildungsoptik
- 60: Ringlinse
- 601: Spiegelsystem
- 61: Spiegel, Ringspiegel
- 66: Weg der Abbildungsoptik bei Rotation um die Rotationsach- se
- 8: Streulicht
- 80: Streulichtverlauf
- 81: Streuwinkel θₛ in ° des Streulichtes
- 82: Azimutwinkel φₛ in ° des Streulichtes
- 9: Lichtstrahl, Laser-Strahl
- 90: Eintrittswinkel θᵢ in ° des Lichtstrahls
- 14: Aperturblende
- 16: Spiegel
- 17: Lichtfalle
- 18,: Streuung an den Eintritts- und Austrittsoberflächen des
- 19: Prüflings
- 21: Artefakte der Oberfläche des Prüflings
- 22: Tiefe [mm]
- 23: Länge [mm]
- 24: Strahlkanal des Lichtstrahls

## Patentansprüche

1. Verfahren zur Bestimmung von optischen Defekten in optischem transparentem Materialien umfassend bestrahlen des Materials mit Licht einer Lichtquelle, zum Erzeugen von durch optische Defekte hervorgerufenem Streulicht,
Drehen des optischen Materials um eine durch den Defekt verlaufenden Rotationsachse um mindestens einen Drehwinkel ϕs
und Bestimmen der Intensität des Streulichts in einem zur Rotationsachse gebildeten Streuwinkel Θs1 mittels eines Detektors,
Erfassen der Änderung der Intensität des Streulichts bei verschiedenen Drehwinkeln ϕ und
Bestimmen der Größe und/oder der Form des Defekts mittels vorher ermittelter Vergleichswerte.

2. Verfahren nach Anspruch 1, **dadurch gekennzeichnet, dass** die Intensitätsänderung des Streulichtes bei mindestens einem weiteren Streuwinkel Θs2 bestimmt wird und die Differenz den Abstand der Streuintensität zwischen dem ersten Θs1 und zweiten Streuwinkel Θs2 bestimmt und aus dem so ermittelten Abstand die Art des Defektes ermittelt wird.

3. Verfahren nach einem der vorhergehenden Ansprüche, **dadurch gekennzeichnet, dass** das Bestrahlen mit Licht entlang der Rotationsachse erfolgt.

4. Verfahren nach einem der vorhergehenden Ansprüche, **dadurch gekennzeichnet, dass** das Licht, Weißlicht, Infrarotlicht, Licht einer Wellenlänge im sichtbaren Bereich, UV-Licht oder tiefes UV-Licht ist.

5. Verfahren nach einem der vorhergehenden Ansprüche, **dadurch gekennzeichnet, dass** die Lichtquelle ein Laser ist.

6. Vorrichtung zum Bestimmen von optischen Defekten in einem optischen Material umfassend eine Lichtquelle die beim Durchstrahlen des Materials an den Defekten ein Streulicht erzeugt,
eine um eine Achse drehbare Materialhalterung,
eine in einem Streuwinkel Θs zum Strahlengang des Lichtes angeordneten Detektor zum Erfassen von Streulicht, sowie einen Signalgeber, der die räumliche Lage des Detektors sowie den Drehwinkel ϕs an eine rechnergestützte Steuereinheit übermittelt, **dadurch gekennzeichnet, dass** der Detektor die Intensität des Streulichts in Abhängigkeit des Drehwinkels erfasst und an die rechnergestützte Speichereinheit übermittelt und die Speichereinheit die Intensität dem jeweiligen Drehwinkel zuordnet.

7. Vorrichtung nach Anspruch 6 , **dadurch gekennzeichnet, dass** der Strahlengang des Lichtes entlang der Drehachse verläuft.

8. Vorrichtung nach Anspruch 6 bis 7, **dadurch gekennzeichnet, dass** der Detektor ein CCD- und/oder Fotodiodenarray-Element umfasst.

9. Verwendung von nach dem Verfahren nach einem der Ansprüche 1 bis 5 oder mit der Vorrichtung nach Ansprüchen 6 bis 8 erhaltenen optischen Material zur Herstellung von Linsen, Prismen, optischen Fenstern sowie optischen Komponenten für die DUV-Lithographie, Steppern, Excimer-Lasern, Wafern, Computerchips sowie integrierten Schaltungen und elektronischen Geräten, die solche Chips enthalten.
